# EUROPÄISCHE PATENTSCHRIFT

(11) **EP 1 659 050 B1**
(45) Veröffentlichungstag und Bekanntmachung des Hinweises auf die Patenterteilung: **20.08.2008**
(21) Anmeldenummer: 05021692.8
(22) Anmeldetag: 05.10.2005
(51) Int. Cl.: B62D 35/00

(54) **Luftleitvorrichtung für ein Heck eines Personenkraftwagens**
Spoiler for the rear of a motor car
Déflecteur aérodynamique pour l'arrière d'une voiture

(30) Priorität: 18.11.2004 DE 102004055681
(43) Veröffentlichungstag der Anmeldung: 24.05.2006
(73) Patentinhaber: Dr. Ing. h.c. F. Porsche Aktiengesellschaft, 70435 Stuttgart (DE)
(72) Erfinder: Singer, Norbert, 71665 Vaihingen (DE)

(56) Entgegenhaltungen:
- EP-A1- 0 711 700
- WO-A-83/01421
- DE-A1- 10 047 010
- US-A- 4 635 991

## Beschreibung

Die Erfindung betrifft eine Luftleitvorrichtung für ein Heck eines Personenkraftwagens nach dem Oberbegriff des Patentanspruchs 1.

Es ist ein Flügel für Fahrzeuge bekannt, DE 10103 742 A1, der einen Flügelbock und ein Flügelelement umfasst. Das Flügelelement ist an dem Flügelbock schwenkbar gelagert und in einer Wirkstellung elastisch vorgespannt. Mit dieser Ausbildung wird angestrebt, die Bodenhaftung des jeweiligen Fahrzeugs in Abhängigkeit der Fahrgeschwindigkeit zu beeinflussen.

In der DE 40 03 901 C2 wird ein Heckflügel für einen Kraftwagen, insbesondere Sport-oder Rennwagen behandelt, welcher Heckflügel zur Abtriebserzeugung des Kraftwagens dient und von der Rückseite des Wagens betrachtet eine in etwa U-förmige Konstruktion mit Schenkeln und Steg aufweist. Dabei sind der Steg als Flügel und die Schenkel als Leitwerke ausgeführt, deren freie Enden mit geringem Abstand zur Fahrbahn verlaufen. Darüber hinaus ist dieser Heckflügel mittels einer säulenartigen Stützeinrichtung am Aufbau des Kraftfahrzeugs befestigt Aus der EP 0 711 700 A1 ist eine Luftleiteinrichtung am Heck eines Fahrzeugs bekannt, welche zwischen Seitenwangen angeordnete Flügel umfasst. Die Seitenwangen sind durchgehend von einem oberen Flügel bis zu einem unteren Flügel oder dem Fahrzeugaufbau angeordnet. Zwischen den Flügeln bildet sich eine Luftdurchtrittsöffnung. Aus der US 4 635 991A, die den Oberbegiff des Anspruchs 1 bildet, ist ein Heckflügel eines Fahrzeugs bekannt, der über zwei aufrechte Stützen mit dem Fahrzeugaufbau verbunden ist. Endseitig des Flügels sind abwärts gerichtete Leitwerke angeordnet. Des Weiteren ist aus der WO 83/01 421 A ein Heckflügel bekannt, welcher einen Flügel umfasst, der über eine Stütze mit dem Fahrzeugaufbau verbunden ist und welcher endseitig Leitwerke aufweist, die hängend angeordnet sind.

Es ist Aufgabe der Erfindung eine Luftleitvorrichtung für ein Heck eines Personenkraftwagens zu schaffen, mit der gezielt und wirkungseffektiv Abtrieb an Hinterrädern realisierbar ist und Luftströmungen steuerbar sind.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Auslegung des Flügels mit ersten Leitwerken und der Querwand mit zweiten Leitwerken eine hochwirksame Luftleitvorrichtung ergibt, die nicht nur funktionsgerecht Abtrieb an den Hinterrädern erzeugt, sondern auch dem Luftwiderstandsbeiwert des Personenkraftwagens Rechnung trägt. So wird das Luftmedium auf einfache Weise zwischen Flügel und Querwand über die Durchströmkanäle hindurchgeführt, wobei Flügel und Querwand mit vertretbaren Mitteln realisierbar sind. Schließlich werden noch vorteilhafte Strömungsverhältnisse durch die Luftführungskästen der Luftleitvorrichtung im Bereich der Hinterräder erzielt, über die eine gerichtete Abführung von Strömungsmedium aus den Radhäusern der Hinterräder erfolgt.

In der Zeichnung wird ein Ausführungsbeispiel der Erfindung gezeigt, das nachstehend näher beschrieben wird.

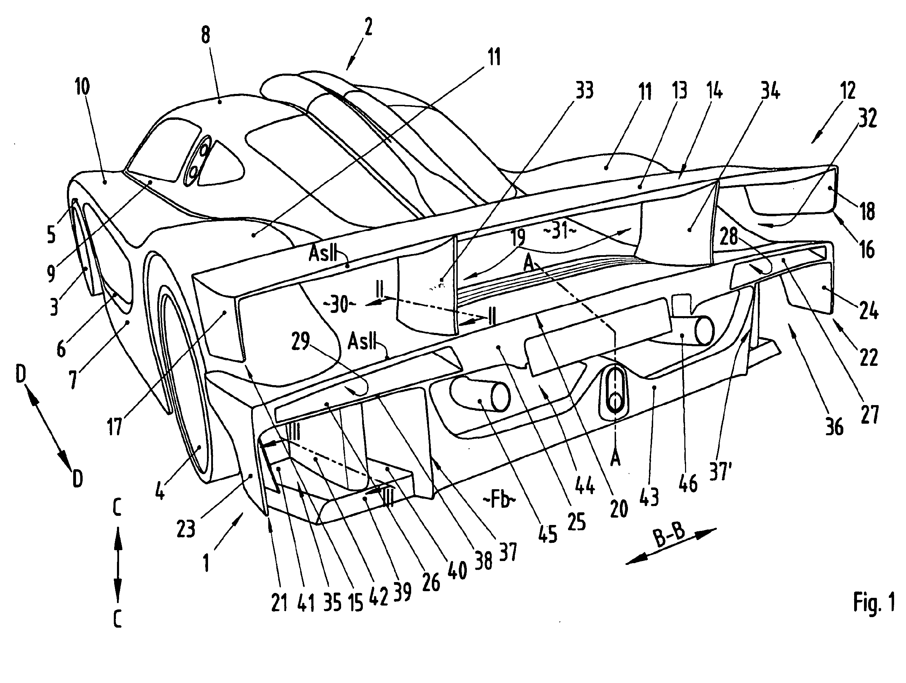

Es zeigen
- Fig. 1: eine Schrägansicht von hinten links auf eine Luftleitvorrichtung für ein Heck eines Personenkraftwagens,
- Fig. 2: einen Schnitt nach der Linie II-II der Fig.1,
- Fig. 3: einen Schnitt nach der Linie III-III der Fig. 1

Ein Personenkraftwagen 1 umfasst einen aerodynamisch geformten Aufbau 2, der von Vorderrädern 3 und Hinterrädern 4 getragen wird. Die Vorderräder 3 und die Hinterräder 4 sind in Radhäusern 5 bzw. 6 des einen Grundkörper 7 und ein Dach 8 besitzenden Aufbaus 2 angeordnet. Der Grundkörper 7 ist gegenüber dem Dach 8 mittels einer Gürtellinie 9 abgesetzt, dergestalt, dass sich zwischen Grundkörper 7 und Dach 8 eine Stufe 10 ergibt, die im Bereich der Hinterräder 4 durch eine letztere abschnittsweise mit gleichem Abstand umgebende Ausformung 11 gebildet wird. In einem Heck 12 des Aufbaus 2 ist eine Luftleitvorrichtung 13 vorgesehen, die einen sich über die wesentliche Breite des Hecks 12 bzw. des Aufbaus 2 erstreckenden und horizontal verlaufenden Flügel 14 besitzt. Der Flügel 14, der an beiden ersten Enden 15 und 16 von aufrechten, und zwar zur Fahrbahn hängenden ersten Leitwerken 17 und 18 begrenzt wird, ruht auf einer Stützeinrichtung 19. Letztere ist mit dem Aufbau 2 bzw. einer ebenfalls etwa horizontal ausgerichteten Querwand 20 fest verbunden, die sich unterhalb des Flügels 14 erstreckt.

An zweite Enden 21 und 22 der die Breite des Flügels 14 aufweisenden Querwand 20 sind zweite Leitwerke 23 und 24 angebracht, die gleichfalls hängend von der Querwand 20 zur Fahrbahn Fb verlaufen und Verlängerungen der ersten Leitwerke 17 und 18 bilden.

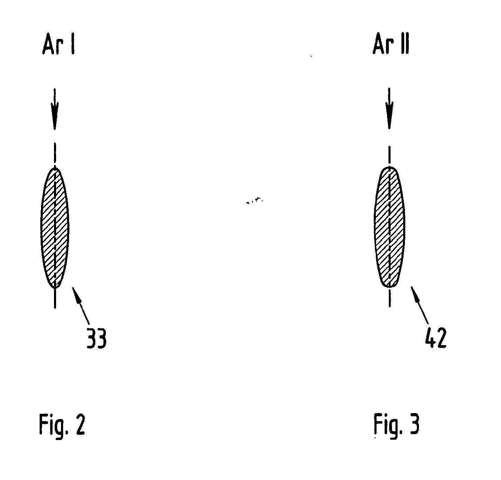

Die Querwand 20 ist beiderseits einer Mittellängsebene A-A des Personenkraftwagens mit einer Begrenzungswand 25 versehen, in die Austrittsöffnungen 26 und 27 von Luftführungskanälen 28 und 29, z.B. zur Motorraumentlüftung, eingearbeitet sind. Zwischen der Querwand 20 und dem Flügel 14 sind Durchströmkanäle 30, 31 und 32 vorgesehen, über die der von den Ausformungen 11 und dem Dach 8 anströmende Luftstrom abgeleitet wird. Die Durchströmkanäle 30, 31 und 32 werden durch aufrechte Säulen 33 und 34 der Stützeinrichtung 19, die ersten Leitwerke 17 und 18, Abschnitte AsI des Flügels 14 und Abschnitte Asll der Querwand 20 gebildet. Gemäß Fig. 2 weisen die Säule 33 und 34 im Querschnitt, bzw. Anströmrichtung Arl eine aerodynamische Gestalt auf, die empirisch oder rechnerisch festlegbar ist.

Im Bereich der Hinterräder 4 sind unterhalb der Querwand 20 Luftführungskästen 35 und 36 ausgebildet. Jeder Luftführungskasten bspw. 35 wird in Fahrzeugquerrichtung B-B von dem zweiten Leitwerk 23, einer mit Abstand zu diesem Leitwerk 23 angeordneten Innenwand 37 und in Fahrzeughöhenrichtung C-C von eine Querwandabschnitt 38 und einem Kastenboden 39 begrenzt. Zur Bildung eines Innenkanals 40 und eines Außenkanals 41 ist zwischen Querwandabschnitt 36 und Kastenboden 39 eine aufrechte Trennsäule 42 vorgesehen, die ebenfalls eine aerodynamische Gestalt aufweist und ähnlich der Säule 33 ausgebildet ist; die Anströmrichtung ist mit Arll bezeichnet. Schließlich sind die Innenwände 37 und 37' der Luftführungskästen 35 und 36 durch einen Querträger 43 abgestützt, der eine Durchgangsöffnung 44 begrenzt. In der Durchgangsöffnung 44 sind zwei in Fahrzeuglängsrichtung D-D ausgerichtete Abgasrohre 45 und 46 angeordnet.

## Patentansprüche

1. Luftleiteinrichtung für ein Heck eines Personenkraftwagens, die einen sich über eine wesentliche Breite des Hecks erstreckenden etwa horizontal verlaufenden Flügel (13) besitzt, der von einer an einem von Vorderrädern (3) und Hinterrädern (4) getragenem Aufbau (2) des Personenkraftwagens angebrachten Stützeinrichtung (19) in Lage gehalten wird und an beiden ersten Enden (15, 16) von aufrechten ersten hängenden Leitwerken (17, 18) begrenzt wird und unterhalb des Flügels (14) eine die Stützeinrichtung (19) haltende hinter den Hinterrädern (4) sich erstreckende Querwand (20) des Aufbaus (2) verläuft, wobei Durchströmkanäle (30, 31 und 32) durch aufrechte beabstandete Säulen (33, 34) der Stützeinrichtung (19), die ersten Leitwerke (17, 18), erste Abschnitte (AsI) des Flügels (14) und zweite Abschnitte (AsII) der Querwand (20) gebildet werden, **dadurch gekennzeichnet, dass** an zweiten Enden (21, 22) der Querwand (20) zweite Leitwerke (23, 24) angebracht sind, die eine hängende Verlängerung der ersten Leitwerke (17, 18) bilden und zu diesen beabstandet sind und dass im Bereich der Hinterräder (4) unterhalb der Querwand (20) Luftführungskästen (35, 36) ausgebildet sind, die in Fahrzeugquerrichtung (B-B) von dem zweiten Leitwerk (23) und einer mit Abstand dazu verlaufenden Innenwand (37) und in Fahrzeughöhenrichtung (C-C) von einem Querwandabschnitt (38) in einem Kastenboden (39) begrenzt werden.

2. Luftleitvorrichtung nach Anspruch 1, **dadurch gekennzeichnet, dass** in eine Begrenzungswand (25) der Querwand (20) beiderseits einer Mittellängsebene (A-A) Austrittsöffnungen (26, 27) von Luftführungskanälen (28, 29) vorgesehen sind.

3. Luftleitvorrichtung nach den Ansprüchen 1 oder 2, **dadurch gekennzeichnet, dass** die Säulen (33, 34) der Stützeinrichtung (19) in Anströmrichtung (Arl) eine aerodynamische Gestalt aufweisen.

4. Luftleitvorrichtung nach den Ansprüchen 1, 2 oder 3, **dadurch gekennzeichnet, dass** zwischen dem Querwandabschnitt (38) und dem Kastenboden (39) eine Trennsäule (42) vorgesehen ist, dergestalt, dass sich ein Innenkanal (40) und ein Außenkanal (41) ergibt.

5. Luftleitvorrichtung nach den Ansprüchen 1, 2, 3 oder 4, **dadurch gekennzeichnet, dass** die Trennsäule (42) eine aerodynamische Gestalt aufweist.

6. Luftleitvorrichtung nach den Ansprüchen 1, 2, 3, 4 oder 5, **dadurch gekennzeichnet, dass** zwischen den Innenwänden (37) sich ein Querträger (43) erstreckt, der eine Durchgangsöffnung (44) begrenzt.

## Claims

1. Spoiler for the rear of a motor vehicle, the spoiler having an essentially horizontally running wing (13) which extends over a substantial width of the rear, is kept in position by a supporting device (19), which is fitted to a motor vehicle structure (2) supported by front wheels (3) and rear wheels (4), and is bounded at both of its first ends (15, 16) by upright, first, hanging deflectors (17, 18), and a transverse wall (20) which holds the supporting device (19), extends behind the rear wheels (4) and belongs to the structure (2) runs below the wing (14), wherein throughflow passages (30, 31 and 32) are formed by upright, spaced-apart pillars (33, 34) of the supporting device (19), the first deflectors (17, 18), first sections (AsI) of the wing (14) and second sections (AsII) of the transverse wall (20), **characterized in that** second deflectors (23, 24) are fitted at second ends (21, 22) of the transverse wall (20), said deflectors forming a hanging extension of the first deflectors (17, 18) and being spaced apart therefrom, and **in that** air-guiding boxes (35, 36) are formed in the region of the rear wheels (4) below the transverse wall (20), said air-guiding boxes being bounded in the transverse direction (B-B) of the vehicle by the second deflector (23) and an inner wall (37) running at a distance therefrom, and in the vertical direction (C-C) of the vehicle by a transverse wall section (38) and a box base (39).

2. Spoiler according to Claim 1, **characterized in that** outlet openings (26, 27) of air-guiding passages (28, 29) are provided in a boundary wall (25) of the transverse wall (20) on both sides of a longitudinal centre plane (A-A).

3. Spoiler according to either of Claims 1 and 2, **characterized in that** the pillars (33, 34) of the supporting device (19) have an aerodynamic form in the approach-flow direction (ArI).

4. Spoiler according to Claims 1, 2 or 3, **characterized in that** a separating pillar (42) is provided between the transverse wall section (38) and the box base (39) in such a manner that an inner passage (40) and an outer passage (41) are produced.

5. Spoiler according to Claims 1, 2, 3 or 4, **characterized in that** the separating pillar (42) has an aerodynamic form.

6. Spoiler according to Claims 1, 2, 3, 4 or 5, **characterized in that** a cross-member (43) which bounds a passage opening (44) extends between the inner walls (37).

## Revendications

1. Dispositif déflecteur d'air pour l'arrière d'un véhicule de tourisme, lequel possède une aile (13) qui s'étend à peu près horizontalement sur une largeur importante de l'arrière, laquelle est maintenue en position par un dispositif support (19) monté sur une carrosserie (2) du véhicule de tourisme qui est portée par les roues avant (3) et les roues arrière (4) et est délimitée aux deux premières extrémités (15, 16) par des premiers empennages (17, 18) suspendus verticaux, une paroi transversale (20) de la carrosserie (2) qui maintient le dispositif support (19) et s'étend derrière les roues arrière (4) s'étendant au-dessous de l'aile (14), des canaux d'écoulement (30, 31 et 32) étant formés par des colonnes (33, 34) verticales espacées du dispositif support (19), les premiers empennages (17, 18), des premières sections (AsI) de l'aile (14) et des deuxièmes sections (AsII) de la paroi transversale (20), **caractérisé en ce qu'**aux deuxièmes extrémités (21, 22) de la paroi transversale (20) sont montés des deuxièmes empennages (23, 24) qui forment une prolongation suspendue des premiers empennages (17, 18) et sont espacés de ceux-ci et **en ce que** des caissons de déflexion d'air (35, 36) sont formés dans la region des roues arrière (4), sous la paroi transversale (20), lesquels sont délimités dans le sens transversal du véhicule (B-B) par le deuxième empennage (23) et une paroi intérieure (37) qui s'étend à une certaine distance de celui-ci et dans le sens de la hauteur du véhicule (C-C) par une portion de paroi transversale (38) et un fond de caisson (39).

2. Dispositif déflecteur d'air selon la revendication 1, **caractérisé en ce que** des ouvertures de sortie (26, 27) de canaux de déflexion d'air (28, 29) sont prévues dans une paroi de délimitation (25) de la paroi transversale (20) des deux côtés d'un plan longitudinal central (A-A).

3. Dispositif déflecteur d'air selon l'une des revendications 1 ou 2, **caractérisé en ce que** les colonnes (33, 34) du dispositif support (19) présentent une forme aérodynamique dans le sens du soufflage (ArI).

4. Dispositif déflecteur d'air selon l'une des revendications 1, 2 ou 3, **caractérisé en ce qu'**une colonne de séparation (42) est prévue entre la portion de paroi transversale (38) et le fond du caisson (39) de manière à obtenir un canal intérieur (40) et un canal extérieur (41).

5. Dispositif déflecteur d'air selon l'une des revendications 1, 2, 3 ou 4, **caractérisé en ce que** la colonne de séparation (42) présente une forme aérodynamique.

6. Dispositif déflecteur d'air selon l'une des revendications 1, 2, 3, 4 ou 5, **caractérisé en ce qu'**entre les parois intérieures (37) s'étend une traverse (43) qui délimite une ouverture de passage (44).
